# EUROPÄISCHE PATENTSCHRIFT

(11) **EP 2 263 956 B1**
(45) Veröffentlichungstag und Bekanntmachung des Hinweises auf die Patenterteilung: **29.08.2012**
(21) Anmeldenummer: 09162682.0
(22) Anmeldetag: 15.06.2009
(51) Int. Cl.: B65G 47/51, B42C 19/08

(54) **Fördervorrichtung zum Fördern von Druckprodukten und Anlage mit einer solchen Fördervorrichtung**
Transport device for transporting printed products and assembly with such a transport device
Dispositif de transport pour le transport de produits d'impression et installation dotée d'un tel dispositif de transport

(43) Veröffentlichungstag der Anmeldung: 22.12.2010
(73) Patentinhaber: Müller Martini Holding AG, 6052 Hergiswil (CH)
(72) Erfinder: Silberbauer, Günther, 4813 Uerkheim (CH)

(56) Entgegenhaltungen:
- EP-A- 1 666 390
- EP-A- 1 880 863
- EP-A- 1 932 788
- WO-A-02/02444
- WO-A-2005/037689
- WO-A-2007/067049
- WO-A-2008/042294
- DE-A1- 2 218 683
- DE-A1-102004 038 284
- FR-A- 2 804 419
- US-A- 4 867 299

## Beschreibung

Die Erfindung betrifft eine Fördervorrichtung zum Fördern von Druckprodukten. Zudem betrifft die Erfindung eine Anlage mit einer solchen Fördervorrichtung,

Fördervorrichtungen der genannten Art sind allgemein bekannt. Die Stauförderstrecke besitzt beispielsweise ein Band oder Rollen, auf denen die Druckprodukte vom Einlauf zum Auslauf gefördert werden. Solche Fördervorrichtungen dienen bei der Herstellung von Druckprodukten beispielsweise zum Fördern von Buchblöcken. Bei der digitalen Buchproduktion werden Papierbahnen oder Einzelbogen von einer digitalen Druckmaschine gedruckt. Daraus werden Buchblöcke hergestellt und In einem Weiterverarbeitungsprozess, beilspielsweise in einem Klebebinder, mit einem Umschlag versehen. Verkettete digitale Buchproduktionsanlagen, wie bereits in der EP08405266.1 beschrieben, ermöglichen eine hohe Leistung. Die Bücher können dabei sowohl in Serien mit grosser Stückzahl als auch in Kleinserie hergestellt werden.

Muss eine solche Anlage infolge einer Störung, beispielsweise einer Störung bei einem Klebbinder, abgestellt werden, so hat dies nicht nur einen Zeitverlust zur Folge, sondern bedeutet auch einen hohen Anfall an Makulatur.

Kurzzeitige Unterbrechungen können von der Fördervorrichtung aufgenommen werden, indem deren Fördergeschwindigkeit entsprechend angepasst wird oder indem die Druckprodukte hintereinander so aufgestaut werden, dass sich ihr Abstand auf "null" verringert und sich die Druckprodukte gegenseitig berühren. Bei einer Unterbrechung kann die Fördervorrichtung hier somit einen Puffer bilden, dies jedoch nur für wenige Druckprodukte.

Im Stand der Technik sind Stauförderstrecken bekannt, welche die Druckprodukte mit Kontakt zueinander aufstauen lassen. Dabei werden schlupfbehaftete Transportsysteme verwendet die beim Aufstauen die Transportwirkung reduzieren. Die Taktzahlen und Pufferplätze sind bei diesen Systemen jedoch begrenzt. Auch sind sogenannte Spiraltürme bekannt geworden, von denen meist zwei in Serie platziert sind. Solche Spiraltürme weisen jeweils mehrere Windungen auf, in welche die Druckprodukte über Weichen vorübergehend ausgelagert werden können. Dabei wird mittels einer Fördervorrichtung eine direkte Verbindung zwischen zwei Verarbeitungsprozessen gebildet. Gibt es bei der Nachfolgermaschine eine Störung, leiten in der Fördervorrichtung angeordnete Weichen den Produktstrom in einen ersten Spiralturm um, der die Druckprodukte beispielsweise in die Höhe fördert. Ein zweiter Spiralturm kann in Serie geschaltet sein, und die Druckprodukte wieder nach unten fördern. Durch die Spiralanordnung des Transportsystems lassen sich bis zu dessen Kapazitätsgrenze kurzeitig relativ viele Druckprodukte auslagern. Beim mittels Weichen erfolgenden Wiedereinführen der Druckprodukte in die Fördervorrichtung wird jedoch die Sequenz der Druckprodukte verändert. Ausserdem benötigen solche Spiraltürme relativ viel Raum und sind konstruktiv vergleichsweise aufwändig.

Aus der WO2005/037689 A1 ist eine Fördervorrichtung zum Transport von Kühloder Gefrierprodukten mit mehreren übereinander angeordneten Förderstrecken bekannt, auf welchen die Produkte in Produktreihen von einem Einlauf zu einem Auslauf gefördert werden. Dabei weist der Einlauf eine Zuführeinrichtung auf, mit welcher eine Produktreihe wahlweise der ersten oder der zweiten Förderstrecke zuführbar ist. Der Auslauf besitzt eine Abführeinrichtung, mit der eine Produktreihe wahlweise der ersten oder der zweiten Förderstrecke entnehmbar ist. Die Produkte werden mit der Zuführeinrichtung und/oder der Abführeinrichtung in einer Produktreihe im Wesentlichen quer zu einer Transportrichtung der ersten oder der zweiten Förderstrecke gefördert. Zudem weisen die Zuführeinrichtung und/oder die Abführeinrichtung einen die Produkte wenigstens einer Produktreihe aufnehmbar ausgebildeten Lift auf.

Die DE2218683, welche die meisten gemeinsamen Merkmale mit dem Anspruch 1 aufweist, beschreibt eine Anlage zum Betrieb einer Giesserei. Die Anlage besteht im Wesentlichen aus einer Formmaschine, einem Formenmagazin und einer um dieses herumgeführten, in sich geschlossenen Förderbahn. In der Formmaschine werden kastenlose Sandformen hergestellt, welche über eine Rollenbahn zu einer als Vertikalaufzug mit einer Winde ausgebildeten Verteilereinrichtung gelangen. Das Formenmagazin weist mehrere parallel übereinander angeordnete Förderbahnen auf, die von der Verteilereinrichtung bestrichen werden, so dass die die Formmaschine verlassenden Sandformen wahlweise an eine der Förderbahnen übergeben werden können Dabei besteht das Formenmagazin aus zwei Gruppen miteinander fluchtend angeordneter Förderbahnen, auf welche die Sandformen übergeben werden. An der Abgabeseite der zweiten Gruppe von Förderbahnen ist eine zweite, wiederum als Vertikalaufzug mit Winde ausgebildete Verteilereinrichtung angeordnet. Die Plattform dieses Aufzugs nimmt zwei Sandformen nebeneinander auf und arbeitet auf die in sich geschlossene Förderbahn, auf welche die Sandformen mittels einer weiteren Rollenbahn übergeben werden.

Der Erfindung liegt die Aufgabe zugrunde, eine Fördervorrichtung der genannten Art zu schaffen, die im Falle einer Störung eine wesentlich höhere Pufferwirkung erfüllen und die Sequenz der Druckprodukte beibehalten kann.

Die Aufgabe ist bei einer Fördervorrichtung durch die Merkmale des Anspruchs 1 gelöst. Eine solche Fördervorrichtung ermöglicht einen dynamischen Wechsel zwischen den Stauförderstrecken. Durch Vermindern der Fördergeschwindigkeit dergeschwindigkeit können auf diesen Stauförderstrecken Druckprodukte gestaut werden. Damit können längere Störungen überbrückt werden, ohne dass die Druckmaschine abgestellt werden muss und die Sequenz der Druckprodukte wird zudem beibehalten. Der Fachmann spricht dabei von "First In - First Out", oder kurz FIFO. Die Erfindung ist vor allem bei verketteten Anlagen vorteilhaft und ermöglicht es, Prozessunterbrüche soweit zu entkoppeln, dass Vorgängermaschinen nicht sofort anhalten müssen. Die Erfindung trägt wesentlich zur Gesamteffizienz einer solchen verketteten Anlage bei.

Gemäss einer Weiterbildung der Erfindung ist vorgesehen, dass die Stauförderstrecken mehrere Einläufe und mehrere Ausläufe aufweisen.

Vorzugsweise sind die Druckprodukte im Bereich der Stauförderstrecken so gesteuert, dass sie sich nicht berühren.

. Ein vorgesehener Lift ermöglicht einen besonders schnellen Wechsel zwischen den beiden Stauförderstrecken. Eine Förderstrecke, die mit der Liftbewegung gekoppelt ist, fördert die Druckprodukte zunächst jeweils in einer ersten Transportrichtung und anschliessend in einer zweiten Transportrichtung, wobei letztere 90 Grad versetzt zu ersterer ist. Sind beispielsweise zwei Stauförderstrecken vorgesehen und übereinander angeordnet, können entsprechend auch zwei Förderstrecken mit dem Lift verbunden werden. Während die eine Förderstrecke von der vorgeordneten Verarbeitungseinrichtung Druckprodukte annimmt, fördert die andere Förderstrecke die bereits zuvor angenommenen Druckprodukte quer zur Stauförderstrecke. Gemäss einer Weiterbildung der Erfindung können sich die beiden Ebenen dabei abwechseln und der Lift kann in der Lücke des zuzuführenden Produktstroms schalten. Die beiden Tische des Lifts und damit auch die auf diesen angeordneten Förderstrecken haben gemäss einer Weiterbildung der Erfindung den halben vertikalen Abstand welchen die Stauförderstrecken zueinander aufweisen. Ist der Lift in der unteren Lage, entspricht die Position der oberen Förderstrecke jener der Zuführstrecke von der vorgeordneten Verarbeitungseinrichtung, Die untere fürderstrecke kann dann quer in die untere Stauförderstrecke fördern. Diese Anordnung erlaubt eine hohe Taktfrequenz, weil die Druckprodukte in der Lücke zwischen den zugeführten Druckprodukten getrennt werden und zudem eine Aufteilung auf mehrere Stauförderstrecken erfolgt.

Da die Stauförderstrecken übereinander angeordnet sind, kann die benötigte Grundfläche klein gehalten werden. Ohne Weiteres können auch drei oder mehr Stauförderstrecken übereinander angeordnet sein.

Eine besonders geeignete und kompakte Anordnung ist dann möglich, wenn die Druckprodukte mit der Zuführeinrichtung und/oder der Abführeinrichtung im Wesentlichen quer zur Transportrichtung der ersten oder der zweiten Stauförderstrecke förderbar sind.

Nach der Erfindung ist vorgesehen, dass wenigstens eine der Stauförderstrecken in wenigstens zwei Zonen unterteilt ist. Diese Zonen können dann jeweils eine bestimmte Anzahl Druckprodukte, beispielsweise Buchblöcke aufnehmen. Dies ermöglicht insbesondere einen einfachen seitlichen Ausgang. Es sind auch mehrere solche seitlichen Ausgänge bzw. Seitenzweige möglich. Die Zonen sind vorzugsweise separat angesteuert und haben vorzugsweise Einzelantriebe. Dies ermöglicht eine besonders dichte Anordnung der Druckprodukte, ohne dass sich diese gegenseitig berühren.

Die erfindungsgemässe Fördervorrichtung ermöglicht insbesondere eine weitgehende Entkopplung zwischen zwei Verarbeitungseinrichtungen, beispielsweise zwischen einer Druckeinrichtung für Buchblöcke und einer Weiterverarbeitungsvorrichtung. Verläuft die Produktion ohne Störung, so kann die efindungsgemässe Fördervorrichtung wie üblich die Druckprodukte fördern, lm Fall einer Störung dient dann die Fördervorrichtung als Puffer, wobei die ursprüngliche Sequenz der Druckprodukte beibehalten wird ("First In - First Out"). Da insbesondere der Anfall an Makulatur vermindert werden kann und der Vorgängerprozess nicht unterbrochen werden muss, können wesentlich Kosten gespart werden. Zudem ist auch eine höhere Leistung möglich. In der Regel läuft der Nachfolgeprozess schneller und die gepufferten Druckprodukte können Innerhalb einer kurzen Zeitdauer wieder abgearbeitet werden.

Die erfindungsgemässe Anlage zum Herstellen von Druckprodukten offenbart , dass Druckprodukte, die beispielsweise von der Druckeinrichtung erzeugt wurden, mit der Zuführeinrichtung wahlweise der ersten oder der zweiten Stauförderstrecke in Produktreihen zufuhtbar sind und mit der Abführeinrichtung wahlweise der ersten oder der zweiten StauförderstrecKe in Produktreihen entnehmbar und der Weiterverarbeitungseinrichtung zuführbar sind. Die erfindungsgemässe Anlage ist ein bevorzugtes Beispiel, bei dem die erfindungsgemässe Fördervorrichtung im Fall von Umstellungsarbeiten bei einem neuen Auftrag nach der nachgeordneten Verarbeitungseinrichtung oder bei Produktionsstörungen als Puffer verwendbar ist. Die erfindungsgemässe Förder vorrichtung kann aber auch bei anderen Anlagen verwendet werden, bei denen eine Pufferwirkung dienlich ist. So kann sie zwischen zwei Druckweiterverarbeitungsprozessen, d.h. zwischen einer ersten und einer zweiten Verarbeitungseinrichtung, beispielsweise zwischen einem Klebebinder und einem Dreischneider oder zwischen einem Dreischneider und einer Bucheinhängelinie bei Hardcover oder zwischen einem Dreischneider und einem Logistiksystem angeordnet sein.

Die Anlage weist gemäss einer Weiterbildung der Erfindung wenigstens eine mit der ersten Verarbeitungsvorrichtung verbundene Druckmaschine, vorzugsweise eine Digitaldruckmaschine auf. Digitaldruckmaschinen erlauben das Herstellen eines Druckproduktes in einer einzigen Sequenz, weil Sie keine statische Druckform aufweisen. So können beispielsweise lnkjetdrucksysteme zum Einsatz kommen, welche fortlaufend ein anderes Druckbild und somit ein Buch in einer Sequenz von der ersten zu letzten Seite drucken können. Grundsätzlich sind aber auch Anlagen mit anderen Druckmaschinen, beispielsweise Offsetdruckmaschinen denkbar.

Gemäss einer Weiterbildung der Erfindung dient die Anlage zum Herstellen von Buchblöcken. Sie kann aber auch zum Erstellen von anderen Druckprodukten, beispielsweise Zeitungen, Broschüren und dergleichen ausgebildet sein.

Nach einer Weiterbildung der Erfindung ist vorgesehen, dass die Fördervorrichtung nach dem Prinzip "First in - First out" gesteuert ist. Vorzugsweise sind der Einlauf und der Auslauf so aufeinander abgestimmt, dass die zuerst beschickte Ebene der Stauförderstrecken, als erste wieder abgearbeitet wird. Dadurch kann bei einer sequenziellen Produktion eine Durchmischung von Aufträgen vermieden werden.

Weitere vorteilhafte Merkmale der Erfindung ergeben sich aus den abhängigen Patentansprüchen, der nachfolgenden Beschreibung sowie der Zeichnung.

Ausführungsbeispiele der Erfindung werden nachfolgend anhand der Zeichnungen 1 bis 4 näher erläutert. Es zeigen:
- Figur 1: schematisch eine räumliche Ansicht einer Anlage mit einer erfindungsgemäs- sen Fördervorrichtung,

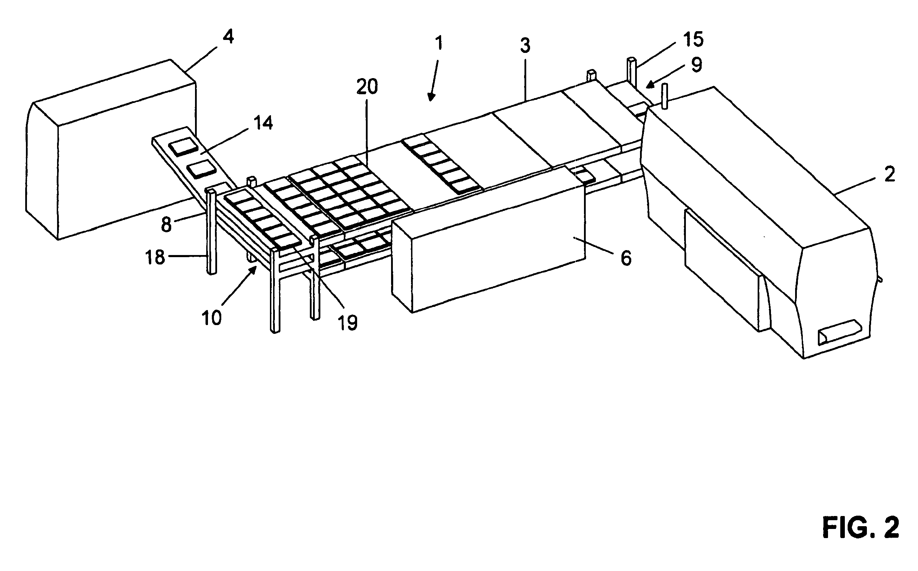

- Figur 2: eine weitere räumliche Ansicht der Anlage gemäss Figur 1,

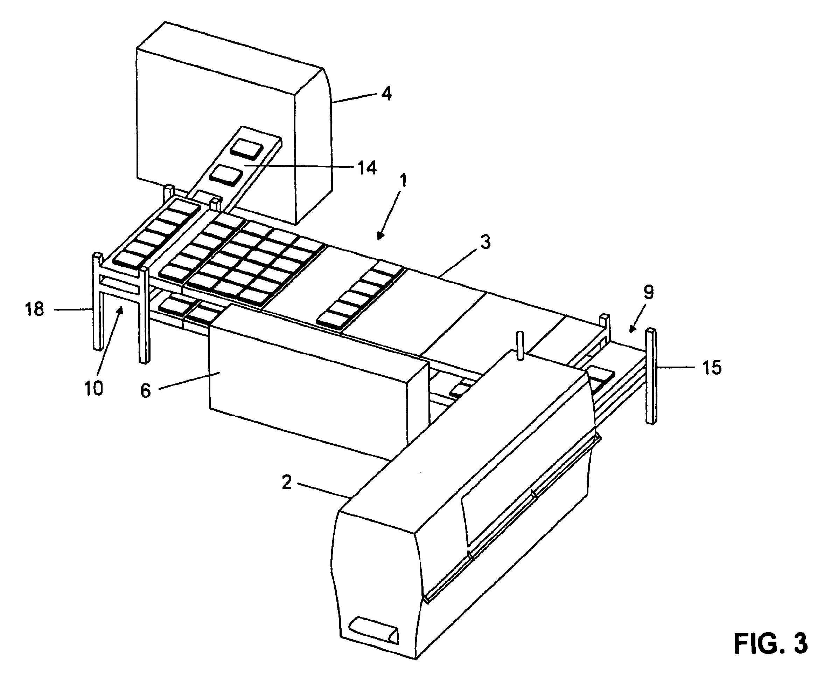

- Figur 3: eine weitere räumliche Ansicht der erfindungsgemässen Anlage und
- Figur 4: eine räumliche Ansicht einer erfindungsgemässen Anlage gemäss einer Va- riante.

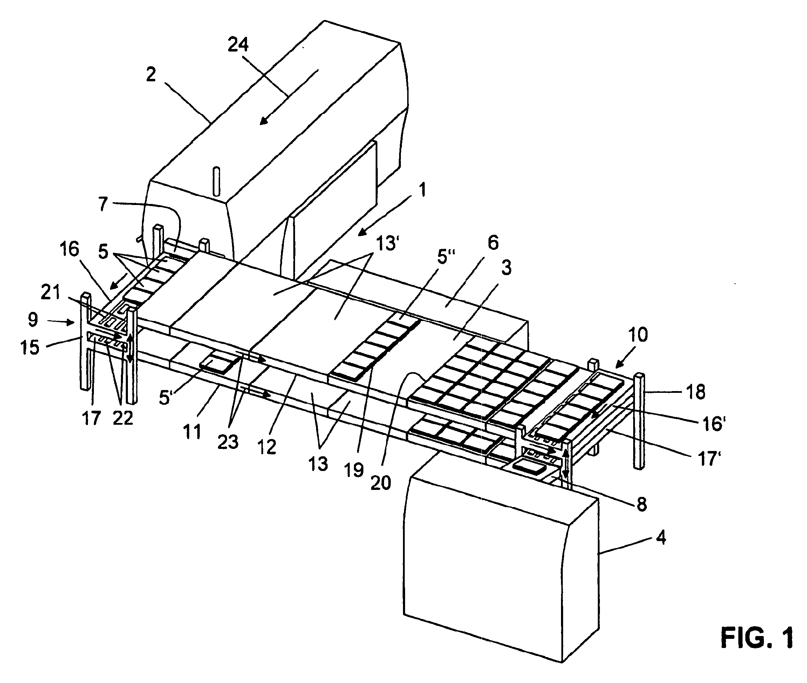

Die in Figur 1 gezeigte Anlage 1 zum Herstellen von Druckprodukten 5 besitzt eine erste Verarbeitungseinrichtung 2, die beispielsweise eine mit einer nicht dargestellten Druckeinrichtung, insbesondere einer Digitaldruckmaschine verbundene Zusammentragmaschine ist. Grundsätzlich sind hier aber auch andere Verarbeitungseinrichtungen 2 denkbar. Weiter ist eine zweite Verarbeitungseinrichtung 4 vorgesehen, in welcher Druckprodukte 5 weiterverarbeitet werden. Diese zweite Verarbeitungseinrichtung 4 enthält beispielsweise einen Klebebinder, dem ein nicht dargestellter, an sich bekannter Dreischneider, in dem die Druckprodukte 5 beschnitten werden können, nachgeschaltet ist. Zwischen der ersten Verarbeitungseinrichtung 2 und der zweiten Verarbeitungseinrichtung 4 ist eine Fördervorrichtung 3 angeordnet. Die erste Verarbeitungseinrichtung 2, die Fördervorrichtung 3 und die zweite Verarbeitungseinrichtung 4 bilden im Wesentlichen eine Synchronstrecke verketteter, antriebsgekoppelter Transportstrecken, die sich über die gezeigte Einrichtung und auch über weitere Einrichtungen erstrecken kann. Die Fördervorrichtung 3 bildet eine Pufferzone mit zwei Ebenen. Die erste, untere Ebene wird durch eine erste Stauförderstrecke 11 und die zweite, obere Ebene durch eine zweite Stauförderstrecke 12 gebildet. Diese beiden Stauförderstrecken 11, 12 sind wie ersichtlich vorzugsweise übereinander angeordnet. Die Fördervorrichtung 3 besitzt einen Einlauf 7 und einen Auslauf 8. Am Einlauf 7 werden die Druckprodukte 5 von der ersten Verarbeitungseinrichtung 2 an die Fördervorrichtung 3 und am Auslauf 8 von der Fördervorrichtung 3 an die zweite Verarbeitungseinrichtung 4 übergeben.

An den Einlauf 7 der Fördervorrichtung 3 schliesst eine Zuführeinrichtung 9 an, welche einen ersten Lift 15 mit wenigstens einem oberen Tisch 16 und einem unteren Tisch 17 aufweist. Die beiden Tische 16, 17 sind jeweils zur Aufnahme von mehreren Druckprodukten 5 geeignet, die an die Fördervorrichtung 3 abgegeben werden. Das Fördern der Druckprodukte 5 auf den Tischen 16, 17 erfolgt mittels Transportbändern 21 und Transportrollen 22. Mit der Zuführeinrichtung 9 bzw. dem Lift 15 werden die Druckprodukte 5 jeweils in eine Position bewegt, in der diese an die erste, untere Stauförderstrecke 11 oder an die zweite, obere Stauförderstrecke 12 übergeben werden können. Stromauf des Auslaufs 8 schliesst eine Abführeinrichtung 10 an, welche im Wesentlichen gleich ausgebildet sein kann wie die Zuführeinrichtung 9 und einen zweiten Lift 18 mit einem oberen Tisch 16' und einem unteren Tisch 17' aufweist. Mit der Abführeinrichtung 10 bzw. dem Lift 18 werden die Druckprodukte 5 wahlweise von der ersten Stauförderstrecke 11 oder von der zweiten Stauförderstrecke 12 übernommen und an die zweite Verarbeitungseinrichtung 4 übergeben. Falls die Eingabeposition der zweiten Verarbeitungseinrichtung 4 weiter oben als die Abführeinrichtung 10 angeordnet ist, kann die Übergabe der Druckprodukte 5 mittels eines den Auslauf 8 mit der zweiten Verarbeitungseinrichtung 4 verbindenden Steigbandes 14 erfolgen, welches ebenfalls Teil der genannten Synchronstrecke ist.

Die Fördervorrichtung 3 bildet wie erwähnt eine Pufferzone, mit der bei einer verketteten Anlage 1 Prozessunterbrüche entkoppelt werden können. Entsteht in der zweiten Verarbeitungseinrichtung 4 ein Unterbruch, so muss die erste Verarbeitungseinrichtung 2, beispielsweise die Zusammentragmaschine und auch die mit dieser verbundene Druckeinrichtung, insbesondere Digitaldruckmaschine, nicht sofort angehalten werden. Geschwindigkeitsdifferenzen zwischen der ersten und der zweiten Verarbeitungseinrichtung 2, 4 können somit durch die Fördervorrichtung 3 kompensiert werden. Dies ist insbesondere vorteilhaft bei einer digitalen Buchproduktionsanlage, bei welcher in-line von der unbedruckten Rolle bis zum fertigen Buch gefertigt wird. So kann eine solche Anlage 1 zwischen einer Drucklinie und einer Klebebindelinie stehen. Die Drucklinie kann beispielsweise eine Umstellung auf ein neues Produkt fliegend durchführen, wonach die Klebebindelinie angehalten werden muss, um beispielsweise die Umschlagzuführung einzustellen oder die Umschläge zu wechseln. Ein solcher Unterbruch kann von der erfindungsgemässen Anlage 1 bzw. von deren Fördervorrichtung 3 kompensiert werden, so dass die Drucklinie vorteilhaft weiterarbeiten kann.

Die erste und die zweite Stauförderstrecke 11, 12 können mit der Zuführeinrichtung 9 beschickt und mit der Abführeinrichtung 10 entsorgt werden. Von der Zuführeinrichtung 9 zur ersten und zur zweiten Stauförderstrecke 11, 12 findet eine Umlenkung der Transportrichtung um 90 Grad statt. Dies gilt ebenfalls für den Transport von der ersten und der zweiten Stauförderstrecke 11, 12 zur Abführeinrichtung 10.

Mit dem ersten Lift 15 der Zuführeinrichtung 9 können die auf deren oberen Tisch 16 geförderten Druckprodukte 5 wahlweise bezüglich der ersten oder der zweiten Stauförderstrecke 11, 12 positioniert und somit an diese übergeben werden. Analoges gilt für den unteren Tisch 17. Durch eine Hubbewegung des ersten Lifts 15 kann der untere Tisch 17 so positioniert werden, dass von diesem Druckprodukte 5 an die erste oder an die zweite Stauförderstrecke 11, 12 abgegeben werden können. Der zweite Lift 18 der Abführeinrichtung 10 ermöglicht ebenfalls eine Hubbewegung des oberen und des unteren Tisches 16', 17'. Diese Tische 16', 17' können somit bezüglich der ersten und der zweiten Stauförderstrecke 11, 12 positioniert werden. Damit ist auch ein Entsorgen bzw. ein Transport der Druckprodukte 5 zur zweiten Verarbeitungseinrichtung 4 in zwei Ebenen möglich.

Die erste und die zweite Stauförderstrecke 11, 12 besitzen jeweils vorzugsweise wenigstens zwei Zonen 13 bzw. 13'. Diese Zonen 13, 13' bilden segmentierte Pufferzonen. Diese sind vorzugsweise mit hier nicht gezeigten Einzelantrieben versehen, welche vorzugsweise nach dem Prinzip "First in - First out" gesteuert werden. Im Produktionsfall sind diese Zonen 13, 13' so gesteuert, dass sie Druckprodukte 5', 5" vom Einlauf 7 zum Auslauf 8 fördern, wobei die Druckprodukte 5', 5" einander nicht berühren. Dabei wird der Abstand zwischen den Druckprodukten 5' bzw. 5" soweit minimiert, dass auf der ersten und der zweiten Stauförderstrecke 11, 12 möglichst viele Druckprodukte 5', 5" gefördert werden können.

Die Stauförderstrecken 11, 12 sind vorzugsweise skalierbar. Diese Skalierung betrifft insbesondere die Anzahl der Zonen 13, 13' sowie die Anzahl der Einläufe und Ausläufe am Einlauf 7 bzw. Auslauf 8, aber auch die Anzahl der Stauförderstrecken 11, 12, d.h. der Zahl der Ebenen. Die genannten Einzelantriebe sind beispielsweise mit Servomotoren versehen, was eine besonders exakte und zuverlässige Steuerung ermöglicht. Die Druckprodukte 5, 5' und 5" können beispielsweise gebundene Bücher mit Umschlägen oder Hartdecken sein, sie können lose oder vorbeleimte Buchblöcke, hinterklebte Buchblöcke mit Vorsatz, aber auch Zeitschriften oder Zeitungen sein. Die Druckprodukte 5, 5' bzw. 5" können auch unterschiedlich ausgebildet sein, beispielsweise unterschiedliche Formate und Dicken besitzen. Es können auch gestapelte Druckprodukte sein.

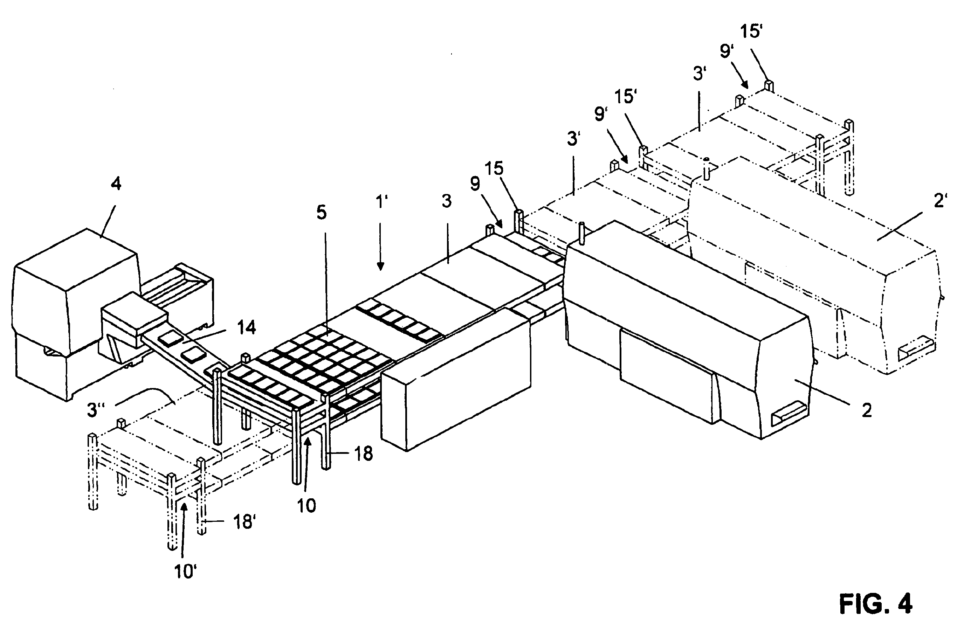

Die Figur 4 zeigt eine erfindungsgemässe Anlage 1', bei der zusätzlich weitere Fördervorrichtungen 3', 3" vorgesehen sind. Bei dieser Anlage 1' können die Zuführeinrichtung 9 und die Abführeinrichtung 10 die Druckprodukte 5 auch den Fördervorrichtungen 3' bzw. 3" übergeben, die somit weitere Pufferzonen bilden können. Die Fördervorrichtungen 3' und 3" sind ähnlich oder gleich aufgebaut wie die oben erläuterte Fördervorrichtung 3 und können auch am Ende der Förderstrecke wiederum Zuführeinrichtung 9' und Abführeinrichtungen 10' von bzw. zu weiteren Verarbeitungseinrichtungen aufweisen.

Nachfolgend wird die Arbeitsweise der erfindungsgemässen Fördervorrichtung bzw. der erfindungsgemässen Anlage näher erläutert.

Mit der Zuführeinrichtung 9 werden die Druckprodukte 5 direkt aus der ersten Verarbeitungseinrichtung 2 entnommen und am Einlauf 7 in die Fördervorrichtung 3 eingefördert. Die Druckprodukte 5 werden dabei wie ersichtlich quer zu einer Transportrichtung 23 der Stauförderstrecken 11, 12 der Fördervorrichtung 3 transportiert, dass heisst, die Rücken der Druckprodukte 5 sind quer zu einer Transportrichtung 24 der ersten Verarbeitungseinrichtung 2 und die Breiten der Druckprodukte 5 dementsprechend längs zu dieser Transportrichtung 24 ausgerichtet. Eine eindimensionale Ansammlung der Druckprodukte 5 im Bereich der Fördervorrichtung 3 bildet eine Produktreihe 19. Eine Mehrzahl in Transportrichtung 23 aufeinander folgender Produktreihen 19 bildet eine Produktgruppe 20.

Beim Einfördern der Druckprodukte 5 wird der Abstand zwischen benachbarten Produktreihen 19 auf ein minimales Mass komprimiert. Dies hat den Vorteil, dass auf der Fördervorrichtung 3 vergleichsweise viele Druckprodukte 5 gefördert bzw. gestaut werden können. Vorzugsweise ist vorgesehen, dass jede Produktreihe 19 Druckprodukte 5 mit gleicher Rückenlänge aufweist. Jedoch können die Rückenlängen, die Breiten und die Dicken der Druckprodukte 5 innerhalb einer Produktreihe 19 auch ohne weiteres variieren. Innerhalb der Fördervorrichtung 3 bleibt die Sequenz der Druckprodukte 5 vorzugsweise erhalten. Dies ermöglicht ein Fördern nach dem Prinzip "First in - First out".

Der untere Tisch 17 des Lifts 15 der Zuführeinrichtung 9 übernimmt die Druckprodukte 5 geschwindigkeitssynchron direkt ab der ersten Verarbeitungseinrichtung 2. Die Druckprodukte 5 berühren sich hierbei vorzugsweise nicht. Für einen sicheren Transport können die Druckprodukte 5 auch fixiert sein, insbesondere wenn es sich dabei um lose Buchblockstapel handelt. Die Fixierung kann beispielsweise durch eine temporäre Beleimung erfolgen, beispielsweise im Bereich der Produktrücken. Mittels eines hier nicht gezeigten Sensors wird die vollständige Belegung des unteren Tisches 17 überwacht und an eine beispielsweise in einem Schaltschrank 6 untergebrachte Steuerung gemeldet. In einer hier nicht gezeigten Lücke zwischen zwei in Transportrichtung 24 der ersten Verarbeitungseinrichtung 2 benachbarten Druckprodukten 5 kann der Lift 15 der Zuführeinrichtung 9 einen Hub ausführen. Nach einem solchen Hub werden die Druckprodukte 5 auf der anderen Stauförderstrecke, beispielsweise auf der oberen, zweiten Stauförderstrecke 12, eingefördert. Das Einfördern erfolgt durch einen Quertransport der Druckprodukte 5 auf dem oberen Tisch 16 oder dem unteren Tisch 17. Zum Transport der Druckprodukte 5 auf den Tischen 16 und 17 in Transportrichtung 24 der ersten Verarbeitungseinrichtung 2 werden beispielsweise die Transportbänder 21 und zum Fördern in Transportrichtung 23 der Stauförderstrecken 11, 12 die Transportrollen 22 verwendet, wobei letztere die Druckprodukte 5 von den Transportbändern 21 abheben. Die Tische 16, 17 bilden demnach jeweils eine Förderstrecke, auf der die Transportrichtung der Druckprodukte 5 um 90 Grad umgelenkt wird. Solche Transportmittel sind dem Fachmann an sich bekannt und werden deshalb hier nicht weiter erläutert. Der genannte Hub kann beispielsweise pneumatisch erfolgen, wobei die Hubhöhe von der konkreten Ausgestaltung der Anlage 1 abhängt und beispielsweise 10 mm betragen kann. Es sind aber auch andere Hubhöhen denkbar.

Die erste und die zweite Stauförderstrecke 11, 12 grenzen unmittelbar an die Zuführeinrichtung 9 bzw. an deren Tische 16, 17 an. Dies ist insbesondere im Hinblick auf den vorgesehenen Synchronlauf vorteilhaft. Der Transport von Druckprodukten 5', 5" auf den beiden Stauförderstrecken 11, 12 erfolgt wie erläutert vorzugsweise innerhalb von Zonen 13, 13'. Die Belegung dieser Zonen 13, 13' mit Druckprodukten 5', 5" kann durch hier nicht gezeigte Belegungssensoren gesteuert werden. Jede dieser Zonen 13, 13' kann mit solchen Sensoren versehen sein und mindestens eine Produktreihe 19 aufnehmen. Eine Zone 13, 13' hat beispielsweise in der Transportrichtung 24 eine Länge von 800 mm und in Transportrichtung 23 von 1250 mm. Selbstverständlich sind aber auch andere Abmessungen möglich. Die Druckprodukte 5', 5" sind so angeordnet, dass ihr gegenseitiger Abstand minimal ist. Dies kann ebenfalls mit Sensoren gesteuert werden. Die Steuerung erfolgt über die im Schaltschrank 6 angeordnete Steuervorrichtung.

Ausgangsseitig sind die erste und die zweite Stauförderstrecke 11, 12 unmittelbar an die Abführeinrichtung 10 bzw. an deren Tische 16', 17' angeschlossen. Die Abführeinrichtung 10 übergibt die Druckprodukte 5', 5" geschwindigkeitssynchron an das Steigband 14 bzw. direkt an die zweite Verarbeitungseinrichtung 4. Das Steigband 14 kann mit einem eigenen Antrieb versehen sein, der vorzugsweise einen Synchronmotor besitzt. Auch im Bereich des Steigbandes 14 berühren sich die Druckprodukte 5' bzw. 5" nicht. Mittels eines hier nicht gezeigten Sensors kann die vollständige Entleerung der Abführeinrichtung 10 überwacht und an die Steuervorrichtung gemeldet werden. Nach einer Entleerung des einen Tisches 16', 17' führt der Lift 18 der Abführeinrichtung 10 einen Hub aus, der ebenfalls pneumatisch erfolgen kann. Nach einem solchen Hub erfolgt das Ausfördern der Druckprodukte 5' bzw. 5" vom anderen Tisch 17', 16' bzw. von der ersten oder der zweiten Stauförderstrecke 11, 12. Das Steigband 14, das beispielsweise als Transportband ausgebildet ist, übernimmt die Druckprodukte 5', 5" geschwindigkeitssynchron von der Abführeinrichtung 10. Anhand eines nicht gezeigten Sensors können die Kanten der Druckprodukte 5', 5" detektiert werden.

Ist gemäss Figur 4 an die Abführeinrichtung 10 eine weitere Fördervorrichtung 3" angebaut, so können bei einer Störung Druckprodukte 5', 5" mit der Abführeinrichtung 10 auf diese weitere Fördervorrichtung 3" ausgelagert werden, bevor diese Druckprodukte 5', 5" an das Steigband 14 übergeben werden. Hierbei wird das genannte Prinzip "First in - First out" vorzugsweise beibehalten. Dies gilt ebenfalls für den synchronen Ablauf und den minimalen Abstand zwischen den Druckprodukten 5' bzw. 5". Die Fördervorrichtungen 3', 3" können ebenfalls mehrere Zonen 13, 13' aufweisen. Verläuft die Produktion störungsfrei, so werden diese weiteren Fördervorrichtungen 3', 3" nicht benutzt. Die Fördervorrichtung 3 übernimmt dann somit den Transport der Druckprodukte 5', 5". Im Falle eines längeren Unterbruches bei der zweiten Verarbeitungseinrichtung 4 oder einer anderen, hier nicht gezeigten, nachfolgenden Einrichtung können die Druckprodukte 5', 5" bis zur Behebung der Störung auf der Fördervorrichtung 3 und wahlweise auch auf einer der oder auf beiden weiteren Fördervorrichtungen 3', 3" gestaut werden. Die auf den weiteren Fördervorrichtungen 3' und/oder 3" gestauten Druckprodukte 5', 5" werden dann der Fördervorrichtung 3 bzw. direkt an das Steigband 14 übergeben. Bei einer Produktumstellung ist der Ablauf im Wesentlichen gleich, wobei dann beispielsweise eine Klebebindelinie angehalten wird und der Druckvorgang mit neuen Druckprodukten 5 weitergeführt werden kann.

Das Fördern der Druckprodukte 5 erfolgt bei der erfindungsgemässen Anlage 1 und deren Fördervorrichtung 3 somit über wenigstens zwei Ebenen. Wie oben erläutert kann zwischen diesen Ebenen nach Art eines Tandemprinzips dynamisch gewechselt werden, um die Längs- und Querförderung voneinander zu trennen. Die Steuerung kann so ausgebildet sein, dass die Förderpositionen der Druckprodukte 5 in der Fördervorrichtung 3 virtuell durch eine Wegsteuerung erfolgen. Die Druckprodukte 5 werden hierbei beispielsweise mittels eines Identifikationsmerkmals, beispielsweise eines Barcodes oder eines Data Matrix Codes verfolgt.

Sofern die weiteren Fördervorrichtungen 3', 3" mit weiteren Zuführeinrichtungen 9' und weiteren Abführeinrichtungen 10' ausgebildet sind, können diese dazu verwendet werden, den Produktstrom auf einen anderen Weiterverarbeitungsprozess umzuleiten. So können mehrere Einläufe 7 auch auf mehrere Ausläufe 8 folgen. Die ganze Anlage 1 arbeitet dann als Verteilsystem mit Pufferfunktion. Mittels der weiteren Fördervorrichtungen 3', 3" können die Druckprodukte 5 bei längeren Unterbrüchen ausgelagert und später wieder zugeführt werden.

## Patentansprüche

1. Fördervorrichtung zum Fördern von Druckprodukten (5), mit einer ersten und mit mindestens einer zweiten, übereinander angeordneten Stauförderstrecke (11, 12), auf welchen die Druckprodukte (5) in Produktreihen (19) von zumindest einem Einlauf (7) zu zumindest einem Auslauf (8) förderbar sind, wobei
• der Einlauf (8) eine Zuführeinrichtung (9) aufweist, mit welcher eine Produktreihe (19) der Druckprodukte (5) wahlweise der ersten Stauförderstrecke (11) oder der zweiten Stauförderstrecke (12) zuführbar ist,
• der Auslauf (9) eine Abführeinrichtung (10) aufweist, mit welcher eine Produktreihe (19) der Druckprodukte (5) wahlweise der ersten Stauförderstrecke (11) oder der zweiten Stauförderstrecke (12) entnehmbar ist,
• die Zuführeinrichtung (9) und/oder die Abführeinrichtung (10) wenigstens einen die Druckprodukte (5) wenigstens einer Produktreihe (19) aufnehmbar ausgebildeten Lift (15, 18) aufweisen,
• wenigstens eine der Stauförderstrecken (11, 12) in wenigstens zwei Zonen (13) unterteilt ist, wobei das Fördern der Produktreihen (19) der Druckprodukte (5) in den Zonen (13, 13') mit Einzelantrieben erfolgt und die Förderpositionen der Druckprodukte (5) mit Sensoren erfasst und gesteuert werden,
**dadurch gekennzeichnet, dass**
• die Druckprodukte (5) mit der Zuführeinrichtung (9) und/oder der Abführeinrichtung (10) in einer Produktreihe (19) im Wesentlichen quer zu einer Transportrichtung (23) der ersten oder der zweiten Stauförderstrecke (11, 12) förderbar sind, und
• der wenigstens eine Lift (15, 18) einen oberen und einen unteren Tisch (16, 17, 16', 17') aufweist,

2. Fördervorrichtung nach Anspruch 1, **dadurch gekennzeichnet, dass** die Tische (16, 17,16', 17') den halben vertikalen Abstand der Stauförderstrecken (11, 12) aufweisen.

3. Fördervorrichtung nach Anspruch 1 oder 2, **dadurch gekennzeichnet, dass** wenigstens zwei Zonen (13) im Wesentlichen quer zur Transportrichtung (23) der entsprechenden Stauförderstrecke (11, 12) unterteilt sind.

4. Fördervorrichtung nach einem der Ansprüche 1 bis 3, **dadurch gekennzeichnet, dass** die beiden Stauförderstrecken (11, 12) im Wesentlichen gleich ausgebildet sind.

5. Fördervorrichtung nach einem der Ansprüche 1 bis 4, **dadurch gekennzeichnet, dass** die Förderpositionen virtuell durch eine Wegsteuerung erfolgen.

6. Fördervorrichtung nach einem der Ansprüche 1 bis 5, **dadurch gekennzeichnet, dass** die Druckprodukte (5) ein Identifikationsmerkmal aufweisen und mittels dieses Identifikationsmerkmals in der Fördervorrichtung (3) verfolgt werden.

7. Fördervorrichtung nach Anspruch 6, **dadurch gekennzeichnet, dass** das Identifikationsmerkmal ein Barcode oder Data Matrix Code ist.

8. Anlage zum Herstellen von Druckprodukten, insbesondere Büchern, mit wenigstens einer ersten Verarbeitungseinrichtung (2), einer zweiten Verarbeitungseinrichtung (4) sowie einer Fördervorrichtung (3) gemäss einem der Ansprüche 1 bis 7 zum Fördern der Druckprodukte (5) von der ersten Verarbeitungseinrichtung (2) zur zweiten Verarbeitungseinrichtung (4), wobei Druckprodukte (5) die von der ersten Verarbeitungseinrichtung (2) erzeugt wurden, mit der Zuführeinrichtung (9) wahlweise der ersten Stauförderstrecke (11) oder der zweiten Stauförderstrecke (12) in Produktreihen (19) zuführbar sind und mit der Abführeinrichtung (10) Druckprodukte (5) wahlweise der ersten Stauförderstrecke (11) oder der zweiten Stauförderstrecke (12) in Produktreihen (19) entnehmbar und der zweiten Verarbeitungseinrichtung (4) zuführbar sind.

9. Anlage nach Anspruch 8, **dadurch gekennzeichnet, dass** die erste Verarbeitungseinrichtung (2) wenigstens eine mit einer Druckmaschine, vorzugsweise mit einer Digitaldruckmaschine verbunden ist.

10. Anlage nach Anspruch 8 oder 9, **dadurch gekennzeichnet, dass** Buchblöcke herstellbar und diese den beiden Stauförderstrecken (11, 12) zuführbar sind.

11. Anlage nach einem der Ansprüche 8 bis 10, **dadurch gekennzeichnet, dass** die Fördervorrichtung (3) nach dem Prinzip "First in - First out" gesteuert ist.

12. Anlage nach einem der Ansprüche 8 bis 11, **dadurch gekennzeichnet, dass** die Fördervorrichtung (3) eine Zuführeinrichtung (9) und eine Abführeinrichtung (10) aufweist, mit denen die Druckprodukte (5) im Wesentlichen quer zur Transportrichtung (23) der Fördervorrichtung (3) förderbar sind.

13. Anlage nach einem der Ansprüche 8 bis 12, **dadurch gekennzeichnet, dass** die Fördervorrichtung (3) mit zumindest einer weiteren Fördervorrichtung (3', 3°) verbunden ist und die zumindest eine, weitere Fördervorrichtung (3', 3") zumindest eine weitere Zuführeinrichtung (9') oder zumindest eine weitere Abführeinrichtung (10') aufweist.

14. Anlage nach Anspruch 13, **dadurch gekennzeichnet, dass** mit der zumindest einen weiteren Fördervorrichtung (3', 3") Druckprodukte (5) bei längeren Unterbrüchen auslagerbar und später wieder zuführbar sind.

## Claims

1. Feeding arrangement for feeding printed products (5), having a first and at least one second accumulating feeding line (11, 12) which are arranged above one another and on which the printed products (5) can be fed in rows (19) from at least one inlet (7) to at least one outlet (8),
• the inset (7) having a infeed arrangement (9) by which a row (19) of the printed products (5) can be fed, as desired, to the first accumulating feeding line (11) or the second accumulating feeding line (12),
• the outlet (8) having an outfeed arrangement (10) by which a row (19) of the printed products (5) can be taken, as desired, from the first accumulating feeding line (11) or the second accumulating feeding line (12),
• the infeed arrangement (9) and/or the outfeed arrangement (10) having at least one lift (15, 18) which is designed to be able to receive the printing products (5) forming at least one row (19),
• at least one of the accumulating feeding lines (11, 12) being divided into at least two zones (13), the feeding of the rows (19) of printed products (5) being performed in the zones (13, 13') by separate drives and the fed positions of the printed products (5) being sensed and controlled with sensors,
• the printed products (5) being able to be fed by the infeed arrangement (9) and/or the outfeed arrangement (10), in a row (19), substantially transversely to a direction of transportation (23) of the first or second accumulating feeding line (11, 12), and
• the at least one lift (15, 18) having an upper and a lower table (16, 17, 16', 17').

2. Feeding arrangement according to claim 1, **characterised in that** the vertical spacing between the tables (16, 17, 16', 17') is half that between the accumulating feeding lines (11, 12).

3. Feeding arrangement according to claim 1 or 2, **characterised in that** at least two zones (13) are divided substantially transversely to the direction of transportation (23) of the accumulating feeding line (11, 12) concerned.

4. Feeding arrangement according to one of claims 1 to 3, **characterised in that** the two accumulating feeding lines (11, 12) are of substantially the same design.

5. Feeding arrangement according to one of claims 1 to 4, **characterised in that** the fed positions are reached in virtual form by means of a travel control system.

6. Feeding arrangement according to one of claims 1 to 5, **characterised in that** the printed products (5) have an identifying feature and are tracked in the feeding arrangement (3) by means of this identifying feature.

7. Feeding arrangement according to claim 6, **characterised in that** the identifying feature is a bar code or data matrix code.

8. System for producing printed products, in particular books, having at least one first processing arrangement (2), one second processing arrangement (4), and one feeding arrangement (3) according to one of claims 1 to 7 for feeding the printed products (5) from the first processing arrangement (2) to the second processing arrangement (4), printed products (5) which are produced by the first processing arrangement (2) being able to be fed by the infeed arrangement (9) in rows (19) to the first accumulating feeding line (11) or the second accumulating feeding line (12) as desired, and printed products (5) being able to be taken by the outfeed arrangement (10) in rows (19) from the first accumulating feeding line (11) or the second accumulating feeding line (12) as desired and being able to be fed to the second processing arrangement (4).

9. System according to claim 8, **characterised in that** the first processing arrangement (2) is connected to at least one printing press and preferably one digital printing press.

10. System according to claim 8 or 9, **characterised in that** book blocks can be produced and can be fed to the two accumulating feeding lines (11, 12).

11. System according to one of claims 8 to 10, **characterised in that** the feeding arrangement (3) is controlled on the first in-first out principle.

12. System according to one of claims 8 to 11, **characterised in that** the feeding arrangement (3) has an infeed arrangement (9) and an outfeed arrangement (10) by which the printed products (5) can be fed substantially transversely to the direction of transportation (23) of the feeding arrangement (3).

13. System according to one of claims 8 to 12, **characterised in that** the feeding arrangement (3) is connected to at least one further feeding arrangement (3', 3") and the at least one further feeding arrangement (3', 3") has at least one further infeed arrangement (9') or at least one further out feed arrangement (10').

14. System according to claim 13, **characterised in that** printed products (5) can be taken off line by the at least one further feed arrangement (3', 3") if interruptions of any great length occur and can later be fed back in.

## Revendications

1. Dispositif de transport pour le transport de produits imprimés (5), avec un premier et au moins un deuxième parcours de transport d'accumulation superposés (11, 12), sur lesquels les produits imprimés (5) peuvent être transportés en rangées de produits (19) depuis au moins une admission (7) jusqu'à au moins une évacuation (8), sachant
- que l'admission (7) présente un dispositif d'alimentation (9) par lequel une rangée (19) de produits imprimés (5) peut être apportée au choix au premier parcours de transport d'accumulation (11) ou au deuxième parcours de transport d'accumulation (12),
- que l'évacuation (8) présente un dispositif d'évacuation (10) par lequel une rangée (19) de produits imprimés (5) peut être prélevée au choix du premier parcours de transport d'accumulation (11) ou du deuxième parcours de transport d'accumulation (12),
- que le dispositif d'alimentation (9) et/ou le dispositif d'évacuation (10) présentent un élévateur (15, 18) conçu pour pouvoir recevoir les produits imprimés (5) d'au moins une rangée de produits (19),
- qu'au moins un des parcours de transport d'accumulation (11, 12) est subdivisé en au moins deux zones (13), le transport des rangées (19) de produits imprimés (5) dans les zones (13, 13') s'effectuant par des entraînements individuels et les positions de transport des produits imprimés (5) étant détectées et commandées par des capteurs,
- que les produits imprimés (5) peuvent, avec le dispositif d'alimentation (9) et/ou le dispositif d'évacuation (10), être transportés dans une rangée de produits (19) sensiblement transversalement à une direction de transport (23) du premier ou du deuxième parcours de transport d'accumulation (11, 12), et
- que l'élévateur au moins unique (15, 18) présente une table supérieure et une table inférieure (16, 17, 16', 17'),

2. Dispositif de transport selon la revendication 1, **caractérisé en ce que** les tables (16, 17, 16', 17') ont un espacement vertical égal à la moitié de celui des parcours de transport d'accumulation (11, 12).

3. Dispositif de transport selon la revendication 1 ou 2, **caractérisé en ce qu'**au moins deux zones (13) sont subdivisées sensiblement transversalement à la direction de transport (23) du parcours de transport d'accumulation correspondant (1 1, 12).

4. Dispositif de transport selon l'une des revendications 1 à 3, **caractérisé en ce que** les deux parcours de transport d'accumulation (11, 12) sont réalisés sensiblement identiques.

5. Dispositif de transport selon l'une des revendications 1 à 4, **caractérisé en ce que** les positions de transport sont définies virtuellement par une commande d'acheminement.

6. Dispositif de transport selon l'une des revendications 1 à 5, **caractérisé en ce que** les produits imprimés (5) présentent une caractéristique d'identification et sont suivis dans le dispositif de transport (3) au moyen de cette caractéristique d'identification.

7. Dispositif de transport selon la revendication 6, **caractérisé en ce que** la caractéristique d'identification est un code barres ou un code à matrice de données.

8. Installation de production de produits imprimés, en particulier de livres, avec au moins un premier dispositif de traitement (2), un deuxième dispositif de traitement (4) ainsi qu'un dispositif de transport (3) selon l'une des revendications 1 à 7 pour transporter les produits imprimés (5) du premier dispositif de traitement (2) au deuxième dispositif de traitement (4), sachant que des produits imprimés (5) qui ont été produits par le premier dispositif de traitement (2) peuvent, par le dispositif d'alimentation (9), être apportés en rangées de produits (19) au choix au premier parcours de transport d'accumulation (11) ou au deuxième parcours de transport d'accumulation (12), et peuvent, par le dispositif d'évacuation (10), être prélevés en rangées de produits (19) au choix du premier parcours de transport d'accumulation (11) ou du deuxième parcours de transport d'accumulation (12), et apportés au deuxième dispositif de traitement (4).

9. Installation selon la revendication 8, **caractérisée en ce que** le premier dispositif de traitement (2) est relié à au moins une machine d'impression, de préférence une machine d'impression numérique.

10. Installation selon la revendication 8 ou 9, **caractérisée en ce que** des corps d'ouvrage peuvent être fabriqués, et ces corps d'ouvrage peuvent être apportés aux deux parcours de transport d'accumulation (11, 12).

11. Installation selon l'une des revendications 8 à 10, **caractérisée en ce que** le dispositif de transport (3) est commandé selon le principe PEPS (premier entré, premier sorti).

12. Installation selon l'une des revendications 8 à 11, **caractérisée en ce que** le dispositif de transport (3) présente un dispositif d'alimentation (9) et un dispositif d'évacuation (10) par lesquels les produits imprimes (5) peuvent être transportés sensiblement transversalement à la direction de transport (23) du dispositif de transport (3).

13. Installation selon l'une des revendications 8 à 12, **caractérisée en ce que** le dispositif de transport (3) est relié à au moins un autre dispositif de transport (3', 3") et l'autre dispositif de transport au moins unique (3', 3") présente au moins un autre dispositif d'alimentation (9') ou au moins un autre dispositif d'évacuation (10').

14. Installation selon la, revendication 13, **caractérisée en ce que**, avec l'autre dispositif de transport au moins unique (3', 3"), des produits imprimés (5) peuvent être retirés en cas de relativement longues interruptions, et apportés à nouveau ultérieurement.
